# EUROPEAN PATENT APPLICATION

(11) **EP 3 576 079 A1**
(43) Date of publication of application: **04.12.2019**
(21) Application number: 17893835.3
(22) Date of filing: 13.12.2017
(51) Int. Cl.: G09B 29/00, G01C 21/26, G09B 29/10

(54) **TRAVEL HISTORY CONVERSION METHOD, INFORMATION PROCESSING DEVICE AND INFORMATION SYSTEM**

(30) Priority: 26.01.2017 JP 2017012250
(71) Applicant: Clarion Co., Ltd., Saitama-shi, Saitama 330-0081 (JP)
(72) Inventor: KONDO, Akihiro, Tokyo 100-8280 (JP)
(74) Representative: Mewburn Ellis LLP
(86) International application number: PCT/JP2017/044794
(87) International publication number: WO 2018/139093

(57) **Abstract**

A travel history conversion method is a method for converting first travel history information into second travel history information with a computer. The first travel history information indicates a travel history of a vehicle based on first map information. The second travel history information is adapted to second map information different from the first map information. The first travel history information includes first intersection history information that indicates the travel history of the vehicle in the first map information for each intersection. The first travel history information is converted into the second travel history information by executing a travel history conversion process with the computer. The travel history conversion process converts the first intersection history information into second intersection history information adapted to the second map information.

## Description

### Technical Field

The present invention relates to a travel history conversion method, an information processing device that uses this travel history conversion method to convert travel history information, and an information system.

### Background Art

Recently, there has been proposed a technique where a travel history of a vehicle is accumulated to utilize for, for example, a route prediction and a traffic congestion prediction. For example, Patent literature 1 discloses a route prediction system that accumulates travel history data of the vehicle in an in-vehicle terminal mounted to the vehicle to obtain a predicted route of the vehicle using this travel history data.

### Citation List

### Patent Literature

Patent literature 1: Japanese Unexamined Patent Application Publication No. 2013-148387

### Summary of Invention

### Technical Problem

The route prediction system disclosed in Patent literature 1 uses an intersection ID that identifies an intersection on map data and a link ID that identifies a road link to accumulate passing frequencies by travelling directions for each intersection and passing frequencies of links as the travel history data of the vehicle. However, since the map data used in the in-vehicle terminal includes various types having a difference in format of map representation, a difference in data generation timing, and the like, the intersection ID and the link ID are not necessarily common between the different pieces of map data. In a case where the map data is updated, presence of a newly opened road and a closed road on the updated map data causes a change in the intersection and the road link. Therefore, when the in-vehicle terminal mounted to the vehicle is replaced with another in-vehicle terminal, and when the map data in the in-vehicle terminal is updated, the travel history data accumulated until then possibly fails to be transferred and used.

### Solution to Problem

A travel history conversion method according to the present invention is a method for converting first travel history information that indicates a travel history of a vehicle based on first map information into second travel history information adapted to second map information different from the first map information with a computer. The first travel history information includes first intersection history information that indicates the travel history of the vehicle in the first map information for each intersection. The first travel history information is converted into the second travel history information by executing a travel history conversion process with the computer. The travel history conversion process converts the first intersection history information into second intersection history information adapted to the second map information.

An information processing device according to the present invention includes a travel history conversion unit that converts first travel history information into second travel history information. The first travel history information indicates a travel history of a vehicle based on first map information. The second travel history information is adapted to second map information different from the first map information. The first travel history information includes first intersection history information that indicates the travel history of the vehicle in the first map information for each intersection. The travel history conversion unit converts the first travel history information into the second travel history information by converting the first intersection history information into second intersection history information adapted to the second map information.

An information system according to the present invention includes an in-vehicle terminal mounted to a vehicle and a server connected to the in-vehicle terminal. The in-vehicle terminal includes an in-vehicle storage, a travel history storing unit, a travel history independence unit, and a travel history upload unit. The in-vehicle storage stores first travel history information that indicates a travel history of the vehicle based on first map information. The travel history storing unit causes the in-vehicle storage to store the first travel history information. The travel history independence unit converts the first travel history information stored in the in-vehicle storage into independent travel history information independent of the first map information. The travel history upload unit transmits the independent travel history information converted from the first travel history information by the travel history independence unit to the server. The server includes a server storage, a travel history adaptation unit, and a travel history delivery unit. The server storage stores the independent travel history information transmitted from the in-vehicle terminal. The travel history adaptation unit converts the independent travel history information stored in the server storage into second travel history information adapted to second map information different from the first map information. The travel history delivery unit delivers the second travel history information converted from the independent travel history information by the travel history adaptation unit to the in-vehicle terminal.

### Advantageous Effects of Invention

With the present invention, when an in-vehicle terminal mounted to the vehicle is replaced with another in-vehicle terminal, and when map data in the in-vehicle terminal is updated, travel history data accumulated until then can be transferred and used.

### Brief Description of Drawings

Fig. 1 is a drawing illustrating a hardware configuration of an in-vehicle terminal according to a first embodiment of the present invention.
Fig. 2 is a drawing illustrating a system configuration of the in-vehicle terminal according to the first embodiment of the present invention.
Figs. 3 include drawings illustrating exemplary travel history information.
Fig. 4 is a flowchart illustrating a flow of a travel history independence process.
Figs. 5 include drawings illustrating exemplary relative position information.
Fig. 6 is a flowchart illustrating a flow of a travel history adaptation process.
Fig. 7 is a flowchart illustrating a flow of an intersection history conversion process.
Fig. 8 is a flowchart illustrating a flow of a road history conversion process.
Fig. 9 is a flowchart illustrating a flow of a conversion target link determination process.
Fig. 10 is a flowchart illustrating a flow of an establishment confirmation process.
Fig. 11 is a drawing illustrating a hardware configuration of an information system according to a second embodiment of the present invention.
Fig. 12 is a drawing illustrating a system configuration of the information system according to the second embodiment of the present invention.
Fig. 13 is a drawing illustrating a process sequence when independent travel history information is uploaded from an in-vehicle terminal to a server in the information system according to the second embodiment of the present invention.
Fig. 14 is a drawing illustrating a process sequence when the in-vehicle terminal obtains converted travel history information from the server in the information system according to the second embodiment of the present invention.
Figs. 15 include drawings illustrating exemplary map type information stored in an in-vehicle terminal-to-map correspondence DB.

### Description of Embodiments

### (First Embodiment)

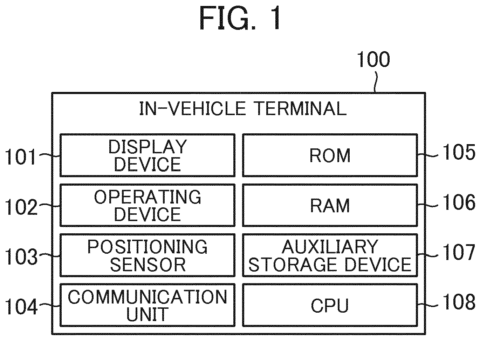

Fig. 1 is a drawing illustrating a hardware configuration of an in-vehicle terminal according to the first embodiment of the present invention. An in-vehicle terminal 100 illustrated in Fig. 1 is an information processing device mounted to a vehicle for use, and includes a display device 101, an operating device 102, a positioning sensor 103, a communication unit 104, a ROM 105, a RAM 106, an auxiliary storage device 107, and a CPU 108. Hereinafter, the vehicle to which the in-vehicle terminal 100 is mounted is referred to as an "own vehicle."

The display device 101 is a device such as a liquid crystal display and an organic EL display that displays image information. For example, the display device 101 displays a map screen around the own vehicle, and guides the own vehicle to a destination in accordance with a route indicated on this map screen. When a travel history independence process and a travel history adaptation process described later are executed by the CPU 108, a permission request screen for requesting permission from a user can be displayed on the display device 101. The operating device 102 is a device that accepts operations to the in-vehicle terminal 100 by the user, and includes, for example, buttons, switches, a keyboard, and a touchscreen.

The positioning sensor 103 is a sensor for measuring a position of the own vehicle. The positioning sensor 103 includes, for example, a GPS sensor. The communication unit 104 is connected to a communication line such as Internet, and communicates with a server (not illustrated) and the like. The in-vehicle terminal 100 can use the communication unit 104 to, for example, download latest map information and traffic congestion information from the server and upload travel information of the own vehicle to the server.

The ROM 105 is a read-only storage device that stores a control program and the like executed by the CPU 108. The RAM 106 is a storage device that temporarily stores information used for the process by the CPU 108. The RAM 106 is used for, for example, loading a program of an application stored in the auxiliary storage device 107 at the execution of this program by the CPU 108, and temporarily storing information generated by the program during the execution by the CPU 108.

The auxiliary storage device 107 is a storage device that stores, for example, map data, voice data, and an application program of a car navigation system, and includes a HDD, a SSD, and the like. The CPU 108 is a processing unit configured to execute programs, and controls each unit of the in-vehicle terminal 100 based on a control program stored in the ROM 105. The programs of the various applications loaded to the RAM 106 from the auxiliary storage device 107 are executed to achieve various functions such as the car navigation system in the in-vehicle terminal 100.

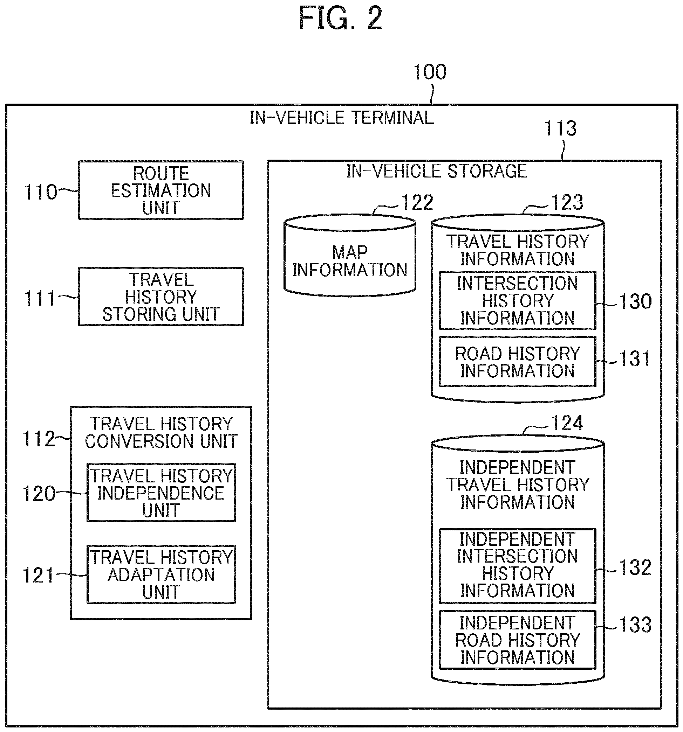

Fig. 2 is a drawing illustrating a system configuration of the in-vehicle terminal according to the first embodiment of the present invention. The in-vehicle terminal 100 includes, as its functions, a route estimation unit 110, a travel history storing unit 111, a travel history conversion unit 112, and an in-vehicle storage 113. The travel history conversion unit 112 includes a travel history independence unit 120 and a travel history adaptation unit 121. The in-vehicle storage 113 stores map information 122, travel history information 123, and independent travel history information 124. The route estimation unit 110, the travel history storing unit 111, and the travel history conversion unit 112 are functions achieved by the CPU 108 executing predetermined programs stored in the ROM 105 and the auxiliary storage device 107. Meanwhile, the in-vehicle storage 113 is a function achieved by the auxiliary storage device 107.

The route estimation unit 110 estimates a route on which the own vehicle travels in the future based on a position of the own vehicle measured by the positioning sensor 103, and the map information 122 and the travel history information 123 stored in the in-vehicle storage 113. A route estimation result by the route estimation unit 110 is available for, for example, an automatic travel control of the own vehicle.

The travel history storing unit 111 causes the in-vehicle storage 113 to store the travel history information 123 based on the route on which the own vehicle travels. The travel history storing unit 111 refers to, for example, the map information 122 to identify the intersection and the road link where the own vehicle has passed, and adds passing frequencies of the identified intersection and road link in the travel history information 123, thus updating the travel history information 123. The travel history information 123 manages the travel history of the own vehicle based on the map information 122 for each intersection and for each road link.

The travel history independence unit 120 converts the travel history information 123 indicative of the travel history of the own vehicle based on the map information 122 into the independent travel history information 124, and stores it in the in-vehicle storage 113. The independent travel history information 124 is travel history information indicative of the travel history of the own vehicle independent of the map information 122. The independent travel history information 124 is generated in advance when contents of the map information 122 are changed by, for example, update of the map and replacement of the in-vehicle terminal 100. The travel history independence unit 120 generates the independent travel history information 124 and stores it in the in-vehicle storage 113 before the contents of the map information 122 are changed, that is, when the map information 122 before the change of the contents is stored in the in-vehicle storage 113. This ensures the travel history of the own vehicle accumulated in the in-vehicle terminal 100 until then to be transferred and used even on the map information 122 after the change of contents. Specific contents of the process performed by the travel history independence unit 120 will be described later.

The travel history adaptation unit 121 converts the independent travel history information 124, which is converted from the travel history information 123 and stored in the in-vehicle storage 113 by the travel history independence unit 120, into information adapted to the map information 122 after the change of contents. Hereinafter, the information converted from the independent travel history information 124 by the travel history adaptation unit 121 is referred to as "converted travel history information." The converted travel history information is stored as new travel history information 123 in the in-vehicle storage 113, and used for route estimation and the like performed by the route estimation unit 110. Specific contents of the process performed by the travel history adaptation unit 121 will be described later.

The map information 122 is the information on the map data used for the function of the car navigation system provided by the in-vehicle terminal 100, the route estimation by the route estimation unit 110, and similar function. The map information 122 stores the information on the intersections and the road links constituting the road. When the travel history independence unit 120 converts the travel history information 123 into the independent travel history information 124, this map information 122 is referred to, and the information for identifying each intersection and each road are obtained.

The travel history information 123 is the information relating to the histories of the intersections and the road links where the own vehicle has passed up to the present, and includes intersection history information 130 and road history information 131. The intersection history information 130 indicates the travel history of the own vehicle for each intersection in the map information 122. The road history information 131 indicates the travel history of the own vehicle for each road link in the map information 122.

The independent travel history information 124 is, similarly to the travel history information 123, the information relating to the histories of the intersections and the road links where the own vehicle has passed up to the present. The independent travel history information 124 includes independent intersection history information 132 and independent road history information 133. The independent intersection history information 132 indicates the travel history of the own vehicle for each intersection while being independent of the map information 122. The independent road history information 133 indicates the travel history of the own vehicle for each road link while being independent of the map information 122.

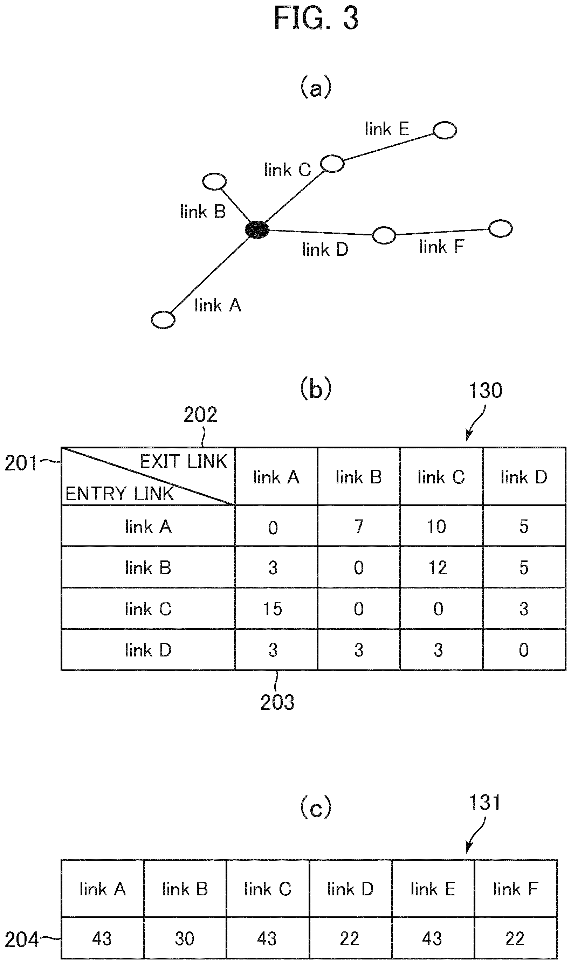

Figs. 3 include drawings illustrating the exemplary travel history information 123. Fig. 3(a) illustrates the exemplary intersection and road links constituting the road. Fig. 3(b) illustrates the exemplary intersection history information 130 corresponding to the intersection of Fig. 3(a) in the travel history information 123. Fig. 3(c) illustrates the exemplary road history information 131 corresponding to each road link of Fig. 3(a) in the travel history information 123.

The road illustrated in Fig. 3(a) includes road links of links A, B, C, D, E, and F, and an intersection to which the links A, B, C, and D are connected. The intersection history information 130 illustrated in Fig. 3(b) includes a history of this intersection as combinations of the road links on which the own vehicle travels at entering into this intersection and at exiting from this intersection, and the history is recorded in a table format of two-dimensional arrangement. That is, in Fig. 3(b), rows 201 indicate the entry links and columns 202 indicate the exit links. For example, a cell 203 indicates that in the passing of the own vehicle at this intersection up to the present, the count where the entry link is the link D and the exit link is the link A is three times.

The intersection history information 130 stores the history tables as illustrated in Fig. 3(b) by the intersections as the travel histories of the own vehicle at the respective intersections. While Fig. 3(b) illustrates the example of the intersection history information 130 indicating the passing frequencies by the combinations of the entry link and the exit link, the travel history may be indicated in another format. For example, the intersection history information 130 may be indicated using a proportion of the passing frequency of each exit link for each entry link, or a proportion of each combination of the entry link and the exit link when a sum of the passing frequencies at this intersection is assumed to be 100%.

The road history information 131 illustrated in Fig. 3(c) records the history of the travel of the own vehicle at the road links for the links A, B, C, D, E, and F illustrated in Fig. 3(a). For example, a cell 204 indicates the count of passing of the own vehicle at the link A up to the present is 43 times.

The road history information 131 stores the histories as illustrated in Fig. 3(c) by the road links as the travel histories of the own vehicle on respective roads. While Fig. 3(c) illustrates the example of the road history information 131 indicating the passing frequencies of the respective road links, the travel history may be indicated in another format. For example, the road history information 131 may be indicated using a proportion of the passing frequency of each road link when a sum of the passing frequencies of a plurality of road links existing in a predetermined area is assumed to be 100%. The travel histories of the respective road links may be counted for each traveling direction of the own vehicle.

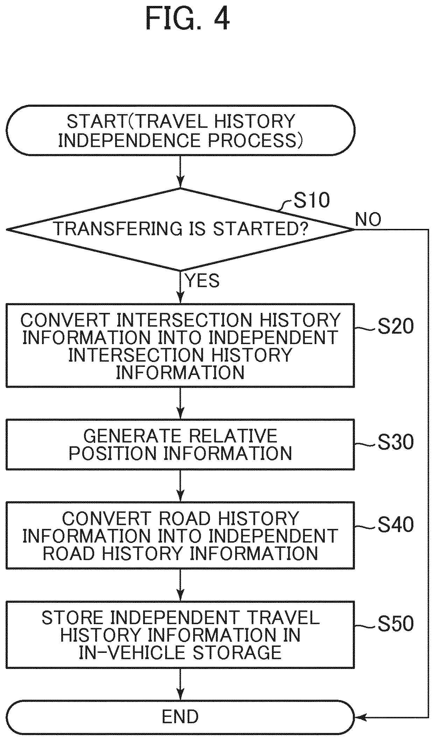

Fig. 4 is a flowchart illustrating a flow of the travel history independence process executed by the travel history independence unit 120. The travel history independence unit 120 executes the travel history independence process in accordance with a processing flow illustrated in Fig. 4, for example, every predetermined time.

First, at Step S10, the travel history independence unit 120 determines whether to start transfer the travel history or not. When the transfer of the travel history is started, the process proceeds to Step S20, and when the transfer is not started, the processing flow of Fig. 4 is terminated. Here, the transfer of the travel history is determined to be started when the contents of the map information 122 are planned to be changed, for example, updating the map and replacing the in-vehicle terminal 100. For example, before updating the map and replacing the in-vehicle terminal 100, the user uses the operating device 102 to perform predetermined operations, thus instructing the in-vehicle terminal 100 to execute the travel history independence process. When this instruction is given, the travel history independence unit 120 determines the start of transferring the travel history at Step S10. The start of transferring the travel history may be determined at Step S10 when the predetermined permission request screen is displayed on the display device 101 and the user performs the operation to indicate the intention of the permission on this permission request screen.

At Step S20, the travel history independence unit 120 converts the intersection history information 130 in the travel history information 123 stored in the in-vehicle storage 113 into the independent intersection history information 132 independent of the map information 122. Here, the intersection history information 130 is converted into the independent intersection history information 132 such that, for example, with reference to the map information 122, position information of each intersection and intersection information (for example, the count of connection links, count of lanes, road type, and presence/absence of signal) in the intersection history information 130 are obtained, and these pieces of information are added to the intersection history information 130 for each intersection. This makes each intersection in the independent intersection history information 132 identifiable on the map without depending on the map information 122. Any information may be used as the independent intersection history information 132 insofar as each intersection is identifiable without depending on the map information 122.

At Step S30, the travel history independence unit 120 generates relative position information that indicates relative positions between the roads connected to respective intersections in the map information 122. Here, for example, for each intersection in the intersection history information 130, respective angles between the adjacent connection links are obtained from the map information 122 for each intersection, and the information indicating the obtained respective angles between the connection links is generated as the relative position information.

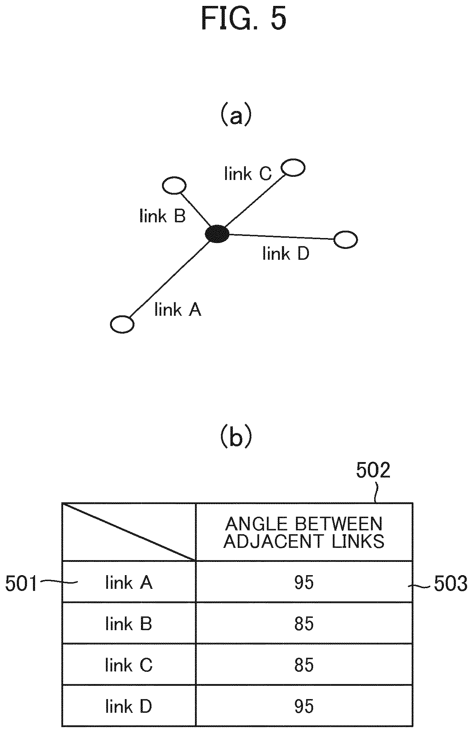

Figs. 5 include drawings illustrating exemplary relative position information. Fig. 5(a) illustrates the exemplary intersection and road links constituting the road, which are identical to the links A, B, C, and D and the intersection to which these road links are connected illustrated in Fig. 3(a). Fig. 5(b) illustrates the exemplary relative position information corresponding to the roads of Fig. 5(a).

The relative position information illustrated in Fig. 5(b) indicates angles between one connection link and another connection link adjacent to the one connection link in a clockwise direction for each connection link of the intersection of Fig. 5(a). That is, in Fig. 5(b), a column 501 indicates each road link connected to this intersection, and a column 502 indicates the angles to the road links adjacent in the clockwise direction with respect to the road links in the column 501. For example, a cell 503 indicates that the angle between the link A and the link B adjacent to the link A in the clockwise direction is 95°.

The travel history independence unit 120 generates the relative position information as illustrated in Fig. 5(b) for each intersection at Step S30 of Fig. 4. At this time, the travel history independence unit 120 can use a well-known position reference technology to generate the relative position information based on the map information 122. While Fig. 5(b) illustrates the example of the relative position information of the intersection indicated by the angle between the connection links adjacent to one another at this intersection, the relative position information may be indicated in another format.

Returning to the description of Fig. 4, at Step S40, the travel history independence unit 120 converts the road history information 131 in the travel history information 123 stored in the in-vehicle storage 113 into the independent road history information 133 independent of the map information 122. Here, the road history information 131 is converted into the independent road history information 133 such that, for example, with reference to the map information 122, position information of each road link and road information (for example, road shape, count of lanes, and road type) in the road history information 131 are obtained, and these pieces of information are added to the road history information 131 for each road link. This makes each road link in the independent road history information 133 identifiable on the map without depending on the map information 122. Any information may be used as the independent road history information 133 insofar as each road link is identifiable without depending on the map information 122.

At Step S50, the travel history independence unit 120 stores the independent intersection history information 132, the relative position information, and the independent road history information 133 generated at Steps S20, S30, and S40, respectively, together as the independent travel history information 124 in the in-vehicle storage 113. After the execution of Step S50, the travel history independence unit 120 terminates the processing flow of Fig. 4.

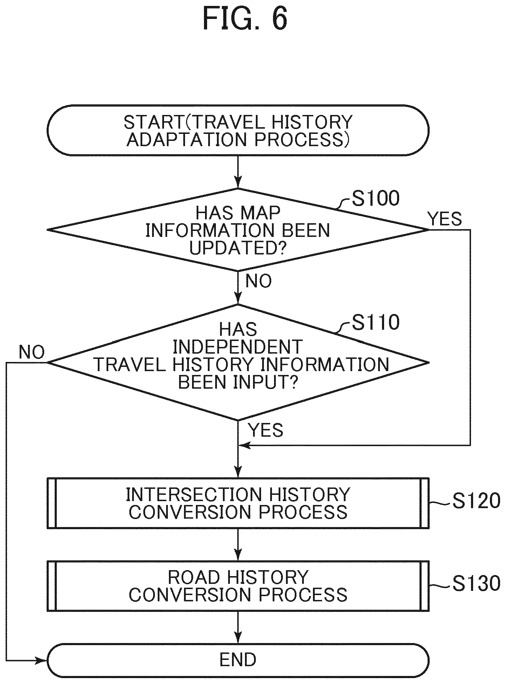

Fig. 6 is a flowchart illustrating a flow of the travel history adaptation process executed by the travel history adaptation unit 121. The travel history adaptation unit 121 executes the travel history adaptation process in accordance with a processing flow illustrated in Fig. 6, for example, every predetermined time.

At Step S100, the travel history adaptation unit 121 determines whether the map information 122 has been updated in the in-vehicle terminal 100 or not. When the map information 122 has not been updated, the process proceeds to Step S110, and when the map information 122 has been updated, the process proceeds to Step S120.

At Step S110, the travel history adaptation unit 121 determines whether the independent travel history information 124 has been input to the in-vehicle terminal 100 from outside or not. For example, when the in-vehicle terminal 100 has been replaced in the own vehicle, and the independent travel history information 124 generated in the in-vehicle terminal 100 before the replacement has been input to the in-vehicle terminal 100 after the replacement, the process proceeds to Step S120. In this case, the input independent travel history information 124 is stored in the in-vehicle storage 113. Meanwhile, when the independent travel history information 124 is not input, the processing flow of Fig. 6 is terminated.

The execution of the above-described determinations at Steps S100 and S110 ensures the travel history adaptation unit 121 to determine whether the contents of the map information 122 have been changed by, for example, updating the map and replacing the in-vehicle terminal 100 or not and perform the processes after Step S120 when the contents of the map information 122 have been changed. At Steps S100 and S110, the presence/absence of the permission by the user may be further added to the determination conditions. For example, the predetermined permission request screen is displayed on the display device 101 when the map information 122 is updated and when the independent travel history information 124 is input to the in-vehicle terminal 100 from outside, and when the user performs the operation to indicate the intention of the permission on this permission request screen, the determination condition at Step S100 or S110 is determined to be satisfied.

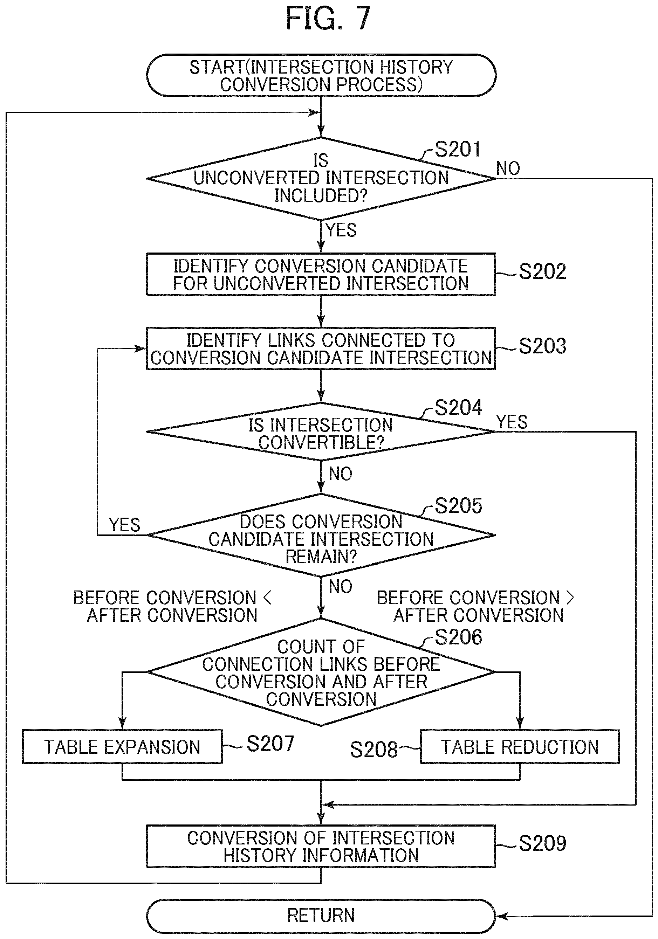

At Step S120, the travel history adaptation unit 121 performs the intersection history conversion process. The intersection history conversion process is a process to convert the independent intersection history information 132 in the independent travel history information 124 stored in the in-vehicle storage 113 so as to be adapted to the map information 122 after the change of contents. Hereinafter, the information converted from the independent intersection history information 132 through the intersection history conversion process at Step S120 is referred to as "converted intersection history information." Specific contents of the intersection history conversion process will be described later with reference to a flowchart of Fig. 7.

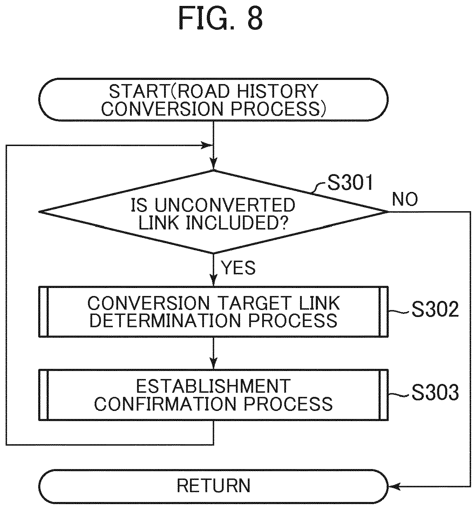

At Step S130, the travel history adaptation unit 121 performs the road history conversion process. The road history conversion process is a process to convert the independent road history information 133 in the independent travel history information 124 stored in the in-vehicle storage 113 so as to be adapted to the map information 122 after the change of contents. Hereinafter, the information converted from the independent road history information 133 through the road history conversion process at Step S130 is referred to as "converted road history information." Specific contents of the road history conversion process will be described later with reference to flowcharts of Figs. 8, 9 and 10. After the execution of S130, the travel history adaptation unit 121 terminates the processing flow of Fig. 6.

Fig. 7 is a flowchart illustrating a flow of the intersection history conversion process executed at Step S120 of Fig. 6.

At Step S201 the travel history adaptation unit 121 determines whether the independent intersection history information 132 includes an unconverted intersection or not. When the unconverted intersection, that is, the intersection not adapted to the map information 122 after the change of contents is included, the process proceeds to Step S202. Meanwhile, when the unconverted intersection is not included, that is, when every intersection in the independent intersection history information 132 has been adapted to the map information 122 after the change of contents, the processing flow of Fig. 7 is terminated and the intersection history conversion process is completed.

At Step S202, the travel history adaptation unit 121 selects one of the unconverted intersections in the independent intersection history information 132, and identifies an intersection corresponding to this intersection as a conversion candidate. Here, the intersection as the conversion candidate is identified by identifying which intersection corresponds to this intersection in the map information 122 after the change of contents as a conversion target of the travel history based on the position information of this intersection, the intersection information, and similar information included in the independent intersection history information 132. Specifically, an intersection included in a predetermined range from a position of this intersection indicated by the position information and an intersection having a feature identical to or close to the feature of this intersection indicated by the intersection information are identified as conversion candidate intersections from the map information 122 after the change of contents. When a plurality of intersections satisfy these conditions, the plurality of intersections are identified as the conversion candidates.

At Step S203, the travel history adaptation unit 121 identifies the connection links of the conversion candidate intersection identified at Step S202, that is, road links connected to the conversion candidate intersection are each identified in the map information 122 after the change of contents as the conversion target of the travel history. When the plurality of conversion candidate intersections are identified at Step S202, the intersection with the highest possibility among them is simply selected to execute the process of Step S203.

At Step S204, the travel history adaptation unit 121 determines, for the intersection selected at Step S202, whether the travel history of this intersection indicated by the independent intersection history information 132 is convertible into the travel history of the conversion candidate intersection identified at Step S203 or not. As a result, in the case of the determination of being convertible, the process proceeds to Step S209, and otherwise, that is, in the case of the determination of being inconvertible, the process proceeds to Step S205. Here, for example, it is determined whether the connection links of the conversion candidate intersection identified at Step S203 each satisfy a predetermined conversion condition or not. For example, when respective distances between the positions of the connection links of this intersection in the independent road history information 133 and the connection links of the conversion candidate intersection are within a predetermined range, and respective differences between the features of the connection links of this intersection and the features of the connection links of the conversion candidate intersection are within a predetermined range, the connection links of the conversion candidate intersection are each determined to satisfy the conversion condition. Whether the connection links of the conversion candidate intersection each satisfy the conversion condition or not may be determined based on the relative position information included in the independent travel history information 124. That is, the angles between the mutually adjacent connection links are calculated, and when the differences between these angles and the angles indicated by the relative position information are within a predetermined range, the connection links of the conversion candidate intersection are each determined to satisfy the conversion condition. Then, when such conversion conditions are determined to be satisfied, the travel history of this intersection is determined to be convertible into the travel history of the conversion candidate intersection. When no conversion candidate intersection is identified at Step S202, the determination of being inconvertible is simply made at Step S204. When a plurality of conversion candidate intersections are identified at Step S202, the process of Step S204 is simply executed on the intersection with the highest possibility among them.

At Step S205, the travel history adaptation unit 121 removes the conversion candidate intersection determined that the travel history is inconvertible at Step S204 from the process target, and then, determines whether the conversion candidate intersection still remains or not. As a result, when the conversion candidate intersection still remains, that is, when the conversion candidate intersection where the determination of Step S204 has not been performed yet exists among the plurality of conversion candidate intersections identified at Step S202, the process returns to Step S203. In this case, the travel history adaptation unit 121 selects a new conversion candidate intersection, and then, executes the processes of above-described Steps S203 and S204. Meanwhile, when the conversion candidate intersection does not remain, that is, when the determination of Step S204 has been finished for all of the plurality of conversion candidate intersections identified at Step S202, the travel history adaptation unit 121 advances the process to Step S206. In this case, the travel history adaptation unit 121 determines that the travel history of this intersection indicated by the independent intersection history information 132 cannot be directly converted because the count of the road links connected to this intersection is different between before and after the change of the map information 122. Therefore, in order to adjust the information on the travel history of this intersection in the changed intersection history information in accordance with the changed map information 122, the process of Step S206 and the process of Step S207 or S208 described below are executed.

At Step S206, the travel history adaptation unit 121 determines which count of the connection links is greater, before the conversion or after the conversion for the intersection selected at Step S202. As a result, when the count of the connection links after the conversion is determined to be greater, that is, when the count of the connection links of the conversion candidate intersection is greater than the count of the connection links of this intersection in the independent intersection history information 132, the process proceeds to Step S207. Meanwhile, when the count of the connection links before the conversion is determined to be greater, that is, when the count of the connection links of the conversion candidate intersection is smaller than the count of the connection links of this intersection in the independent intersection history information 132, the process proceeds to Step S208. When a plurality of conversion candidate intersections are identified at Step S202, the process of Step S206 is simply executed on the intersection with the highest possibility among them.

At Step S207, the travel history adaptation unit 121 expands the table of the independent intersection history information 132 for the intersection selected at Step S202. That is, in this case, the greater count of the connection links after the conversion allows the determination that a new road connected to this intersection is added in the changed map information 122. Therefore, a row and a column corresponding to that road are added to the history table of this intersection in the independent intersection history information 132, thus expanding the history table in the converted intersection history information. At this time, respective cells of the added row and column each store a predetermined initial value (for example, 0). The history table of the independent intersection history information 132 has a two-dimensional arrangement similar to that of the history table of the intersection history information 130 exemplified in Fig. 3(b).

At Step S208, the travel history adaptation unit 121 reduces the table of the independent intersection history information 132 for the intersection selected at Step S202. That is, in this case, the smaller count of the connection links after the conversion allows the determination that a part of the road connected to this intersection is deleted in the changed map information 122. Therefore, a row and a column corresponding to that road are deleted from the history table of this intersection in the independent intersection history information 132, thus reducing the history table in the converted intersection history information. At this time, when values stored in respective cells of the history table indicate the passing frequencies by the combinations of the entry link and the exit link, the values in the respective cells in the not deleted rows and columns are simply left as they are. Meanwhile, when the values stored in the respective cells of the history table indicate the proportion of the passing frequency of each exit link for each entry link, or the proportion of each combination of the entry link and the exit link, the values in the remaining cells each need to be adjusted such that a sum of proportions becomes 100% even after the row and the column are deleted. For example, in the case of the proportion of the passing frequency of each exit link for each entry link, the values of the respective cells in the deleted column are distributed to other cells in the identical rows by identical counts and added up, thus ensuring the adjustment of the values of the respective cells in the history table after the reduction.

After the adjustment of the information on the travel history of this intersection in the changed intersection history information in accordance with the changed map information 122 by executing Step S207 or S208, the travel history adaptation unit 121 advances the process to Step S209.

At Step S209, the travel history adaptation unit 121 performs the conversion of the independent intersection history information 132 for the intersection selected at Step S202. Here, the converted intersection history information is generated by deleting unnecessary information such as the position information of this intersection and the intersection information from the information on the travel history of this intersection in the independent intersection history information 132, and adding the information for identifying the conversion candidate intersection corresponding to this intersection in the map information 122 after the change of contents. After the execution of Step S209, the travel history adaptation unit 121 returns the process to Step S201.

In the intersection history conversion process, the above-described processes are repeatedly executed for each intersection, thus ensuring the conversion of the independent intersection history information 132 into the intersection history information adapted to the map information 122 after the change of contents.

Fig. 8 is a flowchart illustrating a flow of a road history conversion process executed at Step S130 of Fig. 6.

At Step S301, the travel history adaptation unit 121 determines whether the independent road history information 133 includes an unconverted road link or not. When the unconverted road link, that is, the road link not adapted to the map information 122 after the change of contents is included, the process proceeds to Step S302. Meanwhile, when the unconverted road link is not included, that is, when every road link in the independent road history information 133 has been adapted to the map information 122 after the change of contents, the processing flow of Fig. 8 is terminated and the road history conversion process is completed.

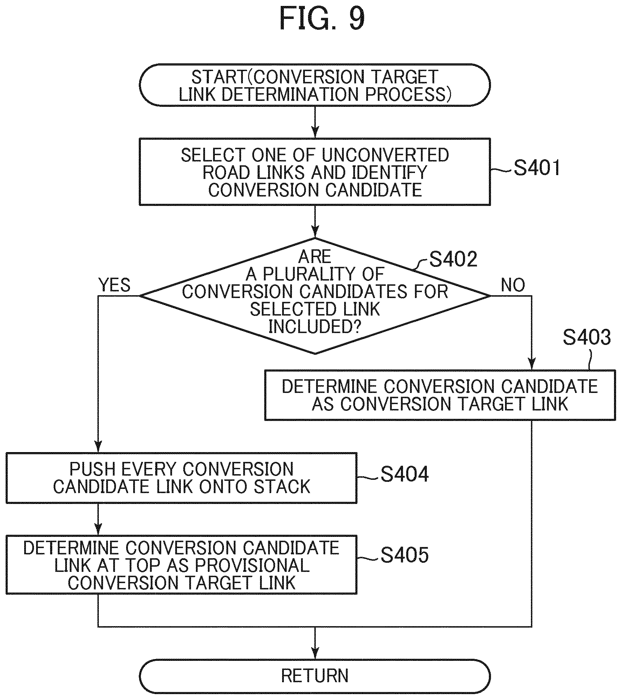

At Step S302, the travel history adaptation unit 121 performs a conversion target link determination process. The conversion target link determination process is a process to determine a conversion target link corresponding to the unconverted road link in the map information 122 after the change of contents. The specific contents of the conversion target link determination process will be described later with reference to a flowchart of Fig. 9.

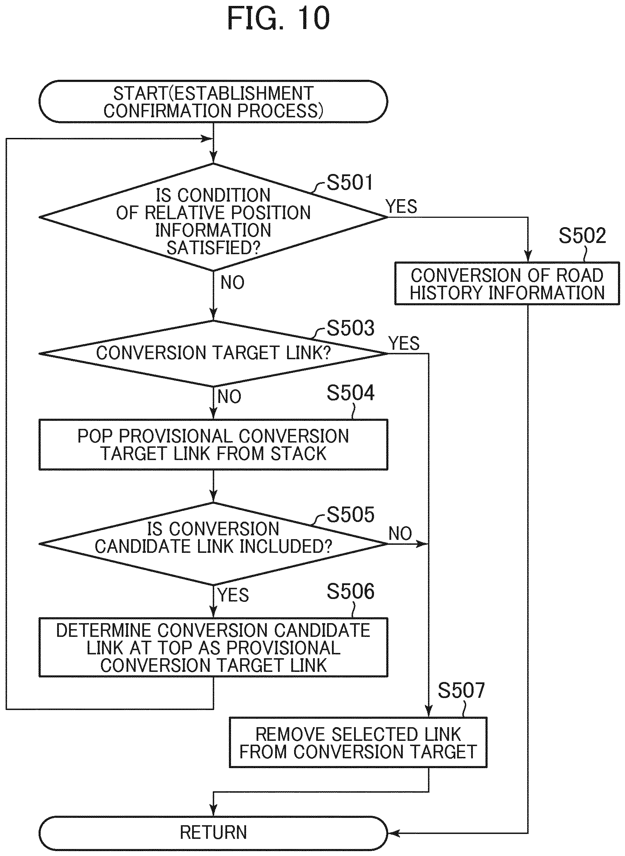

At Step S303, the travel history adaptation unit 121 performs an establishment confirmation process. The establishment confirmation process is a process to confirm whether the conversion target link determined at Step S302 establishes the converted road history information. The specific contents of the establishment confirmation process will be described later with reference to a flowchart of Fig. 10. After the execution of Step S303, the travel history adaptation unit 121 returns the process to Step S301.

Fig. 9 is a flowchart illustrating a flow of the conversion target link determination process executed at Step S302 of Fig. 8.

At Step S401, the travel history adaptation unit 121 selects one of the unconverted road links in the independent road history information 133, and identifies a road link corresponding to this road link as a conversion candidate. Here, the road link as the conversion candidate is identified by identifying which road link corresponds to this road link in the map information 122 after the change of contents as a conversion target based on the position information of this road link, the road information, and similar information included in the independent road history information 133. Specifically, a road link included in a predetermined range from a position of this road link indicated by the position information and a road link having a feature identical to or close to the feature of this road link indicated by the road information are identified as conversion candidate road links from the map information 122 after the change of contents. When a plurality of road links satisfy these conditions, the plurality of road links are identified as the conversion candidates.

At Step S402, the travel history adaptation unit 121 determines whether a plurality of road links are identified as the conversion candidates for the road links selected at Step S401 or not. When a plurality of road links are not identified as the conversion candidates, that is, when only one road link is identified as the conversion candidate, the process proceeds to Step S403, and when a plurality of road links are identified as the conversion candidates, the process proceeds to Step S404.

At Step S403, the travel history adaptation unit 121 determines the one road link as the conversion candidate identified for the road link selected at Step S401 as the conversion target link corresponding to this road link. After the execution of Step S403, the processing flow of Fig. 9 is terminated and the conversion target link determination process is completed.

At Step S404, the travel history adaptation unit 121 pushes all of the plurality of road links as the conversion candidates identified for the road link selected at Step S401 onto a stack.

At Step S405, the travel history adaptation unit 121 provisionally determines the road link as the conversion candidate at the top of the stack generated at Step S404 as a provisional conversion target link corresponding to this road link. After the execution of Step S405, the processing flow of Fig. 9 is terminated and the conversion target link determination process is completed.

Fig. 10 is a flowchart illustrating a flow of the establishment confirmation process executed at Step S303 of Fig. 8.

At Step S501, the travel history adaptation unit 121 determines whether the conversion target link determined at Step S403 or the provisional conversion target link determined at Step S405 in the conversion target link determination process of Fig. 9 satisfies the condition of the relative position information included in the independent travel history information 124 or not. Here, the road link adjacent to the conversion target link or the provisional conversion target link in the clockwise direction is identified in the map information 122 after the change of contents, and the angle between these road links adjacent to one another is calculated. As a result, when the difference between the calculated angle and the angle indicated by the relative position information is within a predetermined range, the condition of the relative position information is determined to be satisfied and the process proceeds to Step S502, and otherwise, the condition of the relative position information is determined not to be satisfied and the process proceeds to Step S503.

At Step S502, the travel history adaptation unit 121 performs the conversion of the independent road history information 133 for the road link selected at Step S401 in the conversion target link determination process of Fig. 9. Here, first, when the determination of Step S501 is performed on the provisional conversion target link corresponding to this road link, this provisional conversion target link is determined as the conversion target link. When the determination of Step S501 is performed on the conversion target link corresponding to this road link, simply this conversion target link is directly used. Next, the converted road history information is generated by deleting unnecessary information such as the position information of this road link and the road information from the information on the travel history of this road link in the independent road history information 133, and adding the information for identifying the conversion target link corresponding to this road link in the map information 122 after the change of contents. After the execution of Step S502, the travel history adaptation unit 121 terminates the processing flow of Fig. 10 and completes the establishment confirmation process.

At Step S503, the travel history adaptation unit 121 determines whether the determination that the condition of the relative position information is not satisfied at Step S501 is made to the conversion target link or not. When it is the conversion target link, the process proceeds to Step S507, and when it is not the conversion target link, that is, when it is the provisional conversion target link, the process proceeds to Step S504.

At Step S504, the travel history adaptation unit 121 pops the provisional conversion target link at the top of the stack and determined not to satisfy the condition of the relative position information at Step S501 from the stack. This releases the provisional determination of the provisional conversion target link and removes the provisional conversion target link from the target of the following processes.

At Step S505, the travel history adaptation unit 121 determines whether a conversion candidate link still remains in the stack from which the provisional conversion target link has been popped at Step S504 or not. When the conversion candidate link remains, the process proceeds to Step S506, and when the conversion candidate link does not remain, that is, when every conversion candidate link in the stack has been popped, the process proceeds to Step S507.

At Step S506, the travel history adaptation unit 121 provisionally determines the conversion candidate link at the top of the stack as a new provisional conversion target link corresponding to this road link. After the execution of Step S506, the travel history adaptation unit 121 returns the process to Step S501, and executes the processes after Step S501 with this provisional conversion target link as the target. Thus, a plurality of conversion candidate links in the stack are sequentially checked until the conversion candidate link that satisfies the condition of the relative position information is identified.

At Step S506, the travel history adaptation unit 121 removes the road link selected at Step S401 from the conversion target in the independent road history information 133. That is, in this case, since the conversion candidate link does not remain in the stack, the conversion of the independent road history information 133 cannot be performed on this road link. Accordingly, the travel history of this road link is treated as a conversion error and not included in the converted road history information. After the execution of Step S506, the processing flow of Fig. 10 is terminated, and the establishment confirmation process is completed.

In the road history conversion process, the above-described processes are repeatedly executed for each road link, thus ensuring the conversion of the independent road history information 133 into the road history information adapted to the map information 122 after the change of contents based on the relative position information included in the independent travel history information 124.

The above-described first embodiment of the present invention provides the following operational advantages.
(1) The in-vehicle terminal 100 as the information processing device includes the travel history conversion unit 112 that converts the travel history information 123 indicative of the travel history of the own vehicle based on the map information 122 before the change of contents into the travel history information adapted to the map information 122 after the change of contents. The travel history information 123 includes the intersection history information 130 that indicates the travel history of the own vehicle for each intersection in the map information 122 before the change of contents, and the road history information 131 that indicates the travel history of the own vehicle for each road in the map information 122 before the change of contents. The travel history conversion unit 112 converts the intersection history information 130 into the intersection history information adapted to the map information 122 after the change of contents, and converts the road history information 131 into the road history information adapted to the map information 122 after the change of contents, thus converting the travel history information 123. This configuration ensures the accumulated travel history information to be transferred and used when the in-vehicle terminal mounted to the vehicle is replaced with another in-vehicle terminal, and when the map information in the in-vehicle terminal is updated.
(2) The travel history conversion unit 112 includes the travel history independence unit 120 and the travel history adaptation unit 121. The travel history independence unit 120 converts the intersection history information 130 into the independent intersection history information 132 that indicates the travel history of the own vehicle for each intersection independent of the map information 122 before the change of contents (Step S20), and converts the road history information 131 into the independent road history information 133 that indicates the travel history of the own vehicle for each road independent of the map information 122 before the change of contents (Step S40). The travel history adaptation unit 121 converts the independent intersection history information 132 into the converted intersection history information (Step S120), and converts the independent road history information 133 into the converted road history information (Step S130). This configuration surely ensures the conversion of the travel history information 123 by the travel history conversion unit 112 when the contents of the map information 122 are changed, for example, the map is updated and the in-vehicle terminal 100 is replaced.
(3) The travel history independence unit 120 generates the relative position information that indicates the relative positions between the respective connection links of the intersection in the map information 122 before the change of contents (Step S30). The travel history adaptation unit 121 converts the independent intersection history information 132 into the converted intersection history information (Steps S204 to S209), and converts the independent road history information 133 into the converted road history information (Steps S501 to S507) based on this relative position information. This configuration ensures the accurate conversion of the independent road history information 133 into the converted road history information in the travel history adaptation unit 121.
(4) The intersection history information 130 includes the history of the combinations of the entry link corresponding to the road on which the own vehicle travels at entering into the intersection and the exit link corresponding to the road on which the own vehicle travels at exiting from the intersection as, for example, the history table for each intersection as illustrated in Fig. 3(b). The travel history conversion unit 112 expands or reduces this history table for the intersection where the count of connected roads in the map information 122 before the change of contents is different from the count of connected roads in the map information after the change of contents (Step S207, S208). This configuration ensures the adjustment of the information on the travel history of this intersection in the changed intersection history information in accordance with the case where a new road connected to this intersection is added and the case where a part of the road connected to this intersection is deleted in the changed map information 122.
(5) The in-vehicle terminal 100 further includes the in-vehicle storage 113 that stores the map information 122 before the change of contents or the map information 122 after the change of contents. When the map information 122 before the change of contents is stored in the in-vehicle storage 113 (Step S10), the in-vehicle terminal 100 operates the travel history independence unit 120 to execute the processes of Steps S20 to S50. When the map information 122 before the change of contents is updated to the map information 122 after the change of contents in the in-vehicle storage 113 (Step S100), or when the independent intersection history information 132 and the independent road history information 133 are input from outside (Step S110), the travel history adaptation unit 121 is operated to execute the processes of Steps S120 and S130. This configuration ensures the operations of the respective travel history independence unit 120 and the travel history adaptation unit 121 at the appropriate timings when the contents of the map information 122 are changed, for example, the map is updated and the in-vehicle terminal 100 is replaced.
(6) The in-vehicle terminal 100 includes the display device 101 that displays the permission request screen for requesting the permission from the user, and the operating device 102 that accepts the operation by the user. The in-vehicle terminal 100 may be configured such that at at least one of Steps S10, S100, and S110, the in-vehicle terminal 100 causes the display device 101 to display the permission request screen before operating at least one of the travel history independence unit 120 and the travel history adaptation unit 121, and when the user inputs the predetermined operation with the operating device 102 corresponding to this display of the permission request screen, the in-vehicle terminal 100 operates at least one of the travel history independence unit 120 and the travel history adaptation unit 121. This configuration ensures the determination whether to convert the travel history information 123 or not, based on the confirmation of the user's intention, in accordance with the intention.

Note that, in the above-described first embodiment of the present invention, the in-vehicle terminal 100 may directly convert the travel history information 123 into the travel history information adapted to the map information 122 after the change of contents without generating the independent travel history information 124. In this case, since it is not necessary to execute the travel history independence process, it is only necessary that the travel history conversion unit 112 has only the function corresponding to the travel history adaptation unit 121 without the travel history independence unit 120. In the travel history adaptation process, instead of the independent travel history information 124, it is only necessary to obtain the information on the intersections and the road links from the map information 122 before the change of contents and convert the travel history information 123 based on this information. Therefore, in this case, the in-vehicle storage 113 needs to store both the map information 122 before the change of contents and the map information 122 after the change of contents. However, for the map information 122 before the change of contents, only the information necessary for the conversion of the travel history information 123 is left and other information may be deleted.

### (Second Embodiment)

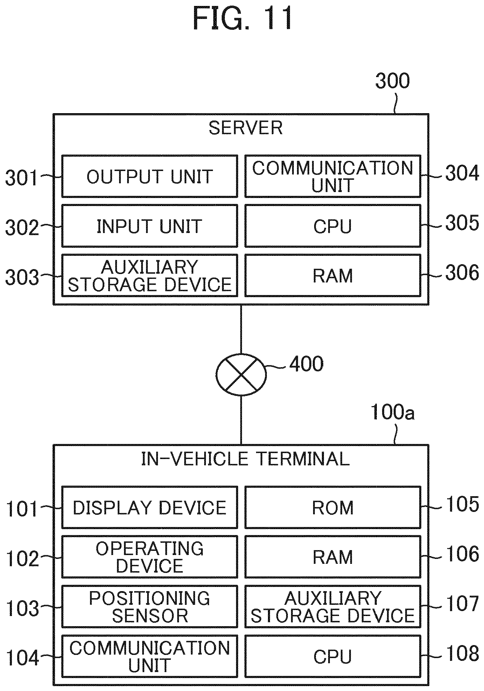

Fig. 11 is a drawing illustrating a hardware configuration of an information system according to the second embodiment of the present invention. The information system illustrated in Fig. 11 includes an in-vehicle terminal 100a and a server 300 connected via a communication line 400. Similarly to the in-vehicle terminal 100 according to the first embodiment illustrated in Fig. 1, the in-vehicle terminal 100a includes the display device 101, the operating device 102, the positioning sensor 103, the communication unit 104, the ROM 105, the RAM 106, the auxiliary storage device 107, and the CPU 108. The server 300 includes an output unit 301, an input unit 302, an auxiliary storage device 303, a communication unit 304, a CPU 305, and a RAM 306. While multiple in-vehicle terminals are connectable to the server 300, Fig. 11 illustrates one in-vehicle terminal 100a on behalf of them.

In the in-vehicle terminal 100a, the communication unit 104 is connected to the communication line 400 and communicates with the server 300. The communication line 400 includes, for example, Internet and a mobile phone line. Other configurations are as described in the first embodiment.

The output unit 301 is connected to a display (not illustrated) and the like, and outputs information for displaying, for example, a process result by the CPU 305. The input unit 302 is connected to a touchscreen, a keyboard, a computer mouse, and the like, and used to input a command from an operator to the server 300. The auxiliary storage device 303 is a storage device that stores a program and various kinds of data, and includes a HDD and a SSD.

The communication unit 304 is connected to the communication line 400, and communicates various kinds of data with the in-vehicle terminal 100a. The CPU 305 is a processing unit that executes programs loaded from the auxiliary storage device 303 to the RAM 306. The RAM 306 is a storage device that temporarily stores information used for the process by the CPU 305. The RAM 306 is used for, for example, loading a program stored in the auxiliary storage device 303 at the execution of this program by the CPU 305, and temporarily storing information generated by the program during the execution by the CPU 305.

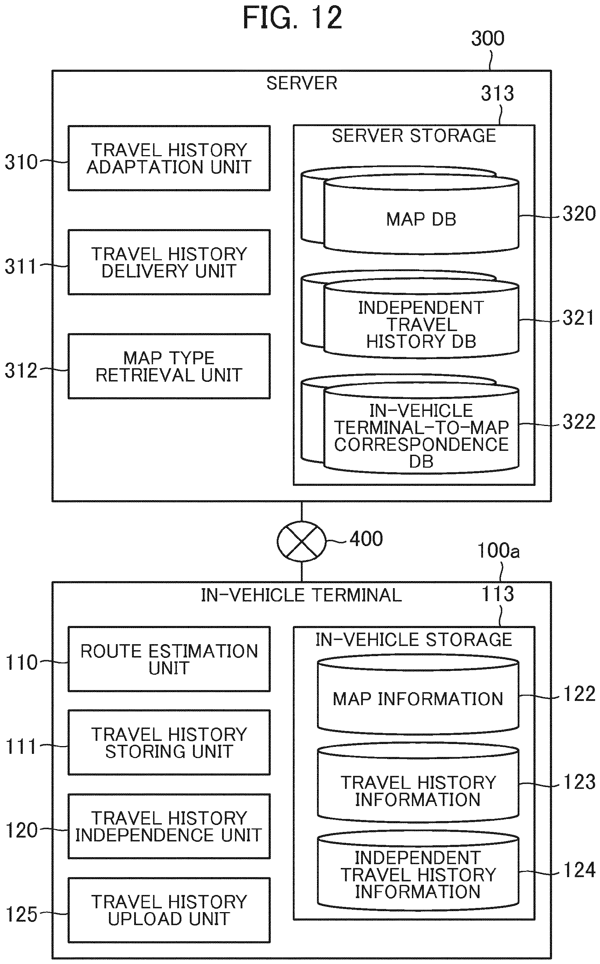

Fig. 12 is a drawing illustrating a system configuration of the information system according to the second embodiment of the present invention. The in-vehicle terminal 100a includes, as its functions, a route estimation unit 110, a travel history storing unit 111, a travel history independence unit 120, a travel history upload unit 125, and an in-vehicle storage 113. The in-vehicle storage 113 stores, similarly to the in-vehicle terminal 100 according to the first embodiment illustrated in Fig. 2, map information 122, travel history information 123, and independent travel history information 124. As described in the first embodiment, the travel history information 123 includes the intersection history information 130 and the road history information 131, and the independent travel history information 124 includes the independent intersection history information 132 and the independent road history information 133, while the illustrations of them are omitted in Fig. 12. The route estimation unit 110, the travel history storing unit 111, the travel history independence unit 120, and the travel history upload unit 125 are functions achieved by the CPU 108 executing predetermined programs stored in the ROM 105 and the auxiliary storage device 107.

The server 300 includes, as its functions, a travel history adaptation unit 310, a travel history delivery unit 311, a map type retrieval unit 312, and a server storage 313. The server storage 313 stores a map DB 320, an independent travel history DB 321, and an in-vehicle terminal-to-map correspondence DB 322. The travel history adaptation unit 310, the travel history delivery unit 311, and the map type retrieval unit 312 are functions achieved by the CPU 305 executing predetermined programs stored in the auxiliary storage device 303. Meanwhile, the server storage 313 is a function achieved by the auxiliary storage device 303.

In the in-vehicle terminal 100a, the respective operations of the route estimation unit 110, the travel history storing unit 111, the travel history independence unit 120, and the in-vehicle storage 113 are as described in the first embodiment. The travel history upload unit 125 uses the communication unit 104 to upload the independent travel history information 124, which is converted from the travel history information 123 by the travel history independence unit 120 and stored in the in-vehicle storage 113, on the server 300.

In the server 300, the travel history adaptation unit 310 converts the independent travel history information 124 uploaded from the in-vehicle terminal 100a and stored in the independent travel history DB 321 into the converted travel history information corresponding to the in-vehicle terminal 100a. The converted travel history information corresponding to the in-vehicle terminal 100a is information adapted to the map information 122 after the change of contents when the contents of the map information 122 are changed in the in-vehicle terminal 100a. The travel history adaptation unit 310 converts the independent travel history information 124 into the converted travel history information corresponding to the in-vehicle terminal 100a with a method similar to that in the travel history adaptation unit 121 of the in-vehicle terminal 100 described in the first embodiment.

The travel history delivery unit 311 uses the communication unit 304 to deliver the converted travel history information, which is generated by the travel history adaptation unit 310 and corresponds to the in-vehicle terminal 100a, to the in-vehicle terminal 100a.

The map type retrieval unit 312 retrieves and obtains map information identical to the map information 122 stored in the in-vehicle storage 113 mounted to the in-vehicle terminal 100a from the map DB 320. The map type retrieval unit 312 retrieves map type information corresponding to the in-vehicle terminal 100a from map type information stored in the in-vehicle terminal-to-map correspondence DB 322. Then, the map type retrieval unit 312 retrieves the map information that matches the map information 122 in the in-vehicle terminal 100a from the map DB 320 based on the retrieved map type information. The map type retrieval unit 312 can retrieve the information, such as an ID and a model of the in-vehicle terminal to which the map information 122 is provided, a target area of the map included in the map information 122, a format of the map information 122, and a delivery year of the map information 122, as the map type information corresponding to the map information 122 from the in-vehicle terminal-to-map correspondence DB 322.

The map DB 320 stores the map information identical to the map information 122 stored in the in-vehicle storage 113 in the in-vehicle terminal 100a. Furthermore, for the in-vehicle terminals connected to the server 300 other than the in-vehicle terminal 100a, map information identical to that stored in each in-vehicle terminal is stored in the map DB 320. That is, the map DB 320 is a database that includes various kinds of map information corresponding to all of the in-vehicle terminals connected to the server 300. Only map information of the latest version corresponding to each in-vehicle terminal may be stored in the map DB 320, or map information of past version also may be included and stored in the map DB 320.

The independent travel history DB 321 stores the independent travel history information 124 uploaded from the in-vehicle terminal 100a. Furthermore, for the in-vehicle terminals connected to the server 300 other than the in-vehicle terminal 100a, the independent travel history information uploaded from each of the in-vehicle terminals is stored in the independent travel history DB 321. The independent travel history information of each of the in-vehicle terminals in the independent travel history DB 321 may be managed for each in-vehicle terminal, or may be managed for each user that uses the in-vehicle terminal or for each vehicle that includes the in-vehicle terminal.

The in-vehicle terminal-to-map correspondence DB 322 stores the map type information corresponding to the map information of each of the in-vehicle terminals including the in-vehicle terminal 100a. For example, the information, such as an ID and a model of the in-vehicle terminal to which the map information is provided, a target area of the map included in the map information, a format of the map information, and a delivery year of the map information, is stored as the map type information in the in-vehicle terminal-to-map correspondence DB 322. The map type information in the in-vehicle terminal-to-map correspondence DB 322 may be managed for each in-vehicle terminal, or may be managed for each model by grouping the in-vehicle terminals for each of the identical models. Alternatively, the management may be performed for each user that uses the in-vehicle terminal or for each vehicle that includes the in-vehicle terminal.

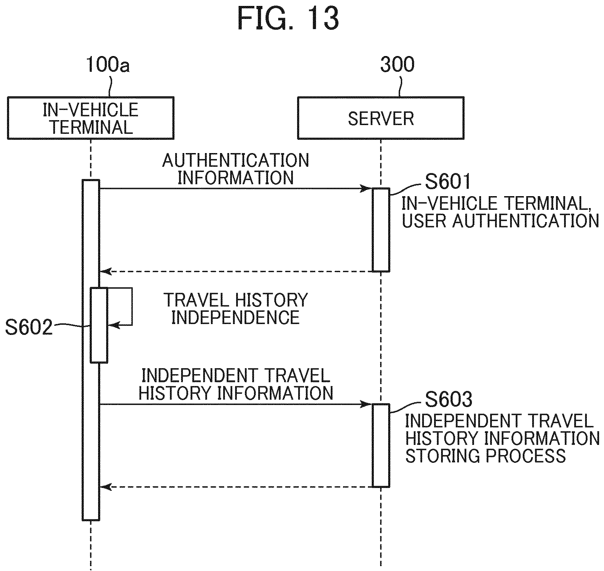

Fig. 13 is a drawing illustrating a process sequence when the independent travel history information 124 is uploaded from the in-vehicle terminal 100a to the server 300 in the information system according to the second embodiment of the present invention. This process sequence is executed when the in-vehicle terminal 100a determines to start transferring the travel history. The determination whether to start transferring the travel history or not is performable with a method similar to that of Step S10 of Fig. 4 described in the first embodiment.

With the determination to start transferring the travel history, the in-vehicle terminal 100a transmits authentication information to the server 300. This authentication information is information to authenticate the in-vehicle terminal 100a as a service provision target in the server 300, and, for example, an ID of the in-vehicle terminal 100a. The server 300 that has received the authentication information from the in-vehicle terminal 100a authenticates the in-vehicle terminal 100a based on this authentication information at Step S601. The in-vehicle terminal 100a may be authenticated by the authentication of the vehicle that includes the in-vehicle terminal 100a or the user that uses the in-vehicle terminal 100a instead of the direct authentication of the in-vehicle terminal 100a. Which authentication method is to be used is simply distinguished depending on the management unit of the independent travel history information of each in-vehicle terminal in the independent travel history DB 321. When the authentication of the in-vehicle terminal 100a is completed, an authentication result is replied to the in-vehicle terminal 100a from the server 300.

When receiving the authentication result indicating normal from the server 300, the in-vehicle terminal 100a uses the travel history independence unit 120 to make the travel history information 123 independent at Step S602. At this time, the travel history independence unit 120 executes the travel history independence process of Fig. 4 described in the first embodiment, thus converting the travel history information 123 into the independent travel history information 124 independent of the map information 122. When making the travel history information 123 independent is completed, the in-vehicle terminal 100a uses the travel history upload unit 125 to upload the generated independent travel history information 124 to the server 300.

When the independent travel history information 124 is uploaded from the in-vehicle terminal 100a, the server 300 stores and saves the received independent travel history information 124 in the independent travel history DB 321 at Step S603. At this time, the server 300 associates the authentication result at Step S601 with the independent travel history information 124 to store in the independent travel history DB 321. When the independent travel history information 124 is normally stored, the server 300 notifies the in-vehicle terminal 100a of a storage result.

In the above-described example, a procedure where the travel history information 123 is made independent in the in-vehicle terminal 100a after the authentication of the in-vehicle terminal 100a in the server 300 has been described. However, the order of these processes can be changed. That is, the travel history information 123 is made independent in the in-vehicle terminal 100a in advance, and then the in-vehicle terminal 100a may request the authentication from the server 300.

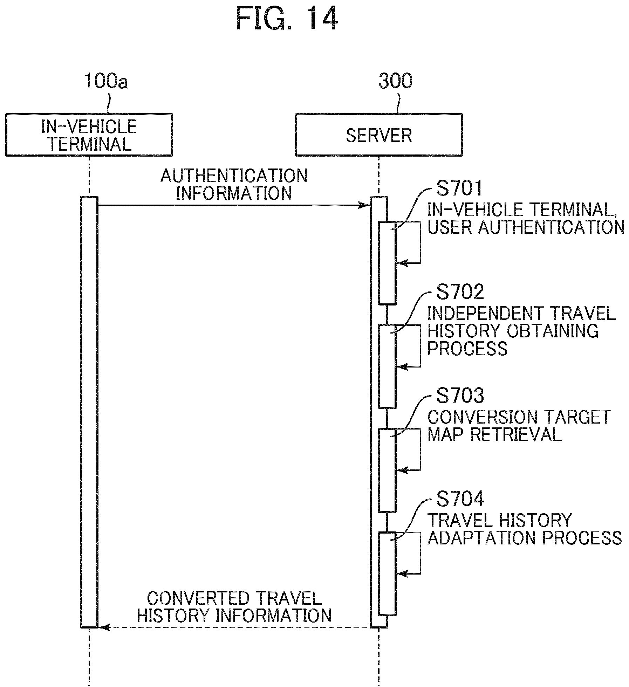

Fig. 14 is a drawing illustrating a process sequence when the in-vehicle terminal 100a obtains the converted travel history information from the server 300 in the information system according to the second embodiment of the present invention. This process sequence is executed when the in-vehicle terminal 100a determines that the map information 122 has been updated. The determination whether the map information 122 has been updated or not is performable with a method similar to that of Step S100 of Fig. 6 described in the first embodiment.

With the determination that the map information 122 has been updated, the in-vehicle terminal 100a transmits the authentication information to the server 300. The server 300 that has received the authentication information from the in-vehicle terminal 100a authenticates the in-vehicle terminal 100a based on this authentication information at Step S701, similar to Step S601 of Fig. 13.

When the authentication of the in-vehicle terminal 100a is completed, the server 300 obtains the independent travel history information 124 of the in-vehicle terminal 100a stored in the independent travel history DB 321 at Step S702.

When the independent travel history information 124 of the in-vehicle terminal 100a is obtained, the server 300 uses the map type retrieval unit 312 to retrieve the map information identical to the map information 122 after the change of contents in the in-vehicle terminal 100a from the map DB 320 at Step S703. At this time, the map type retrieval unit 312 retrieves the map type information corresponding to the in-vehicle terminal 100a from the map type information stored in the in-vehicle terminal-to-map correspondence DB 322 based on the authentication result of the in-vehicle terminal 100a at Step S701. Then, the map information that matches the map information 122 of the in-vehicle terminal 100a is identified among the various kinds of map information stored in the map DB 320 based on the retrieved map type information.

When the map information identical to the map information 122 after the change of contents in the in-vehicle terminal 100a is successfully retrieved, the server 300 uses the travel history adaptation unit 310 to adapt the independent travel history information 124 at Step S704. At this time, the travel history adaptation unit 310 executes the travel history adaptation process of Fig. 6 described in the first embodiment using the map information retrieved at Step S703 on the independent travel history information 124 obtained at Step S702, thus converting the independent travel history information 124 into the travel history information adapted to the map information 122 after the change of contents. When the adaptation of the independent travel history information 124 is completed, the server 300 uses the travel history delivery unit 311 to transmit the generated converted travel history information to the in-vehicle terminal 100a.

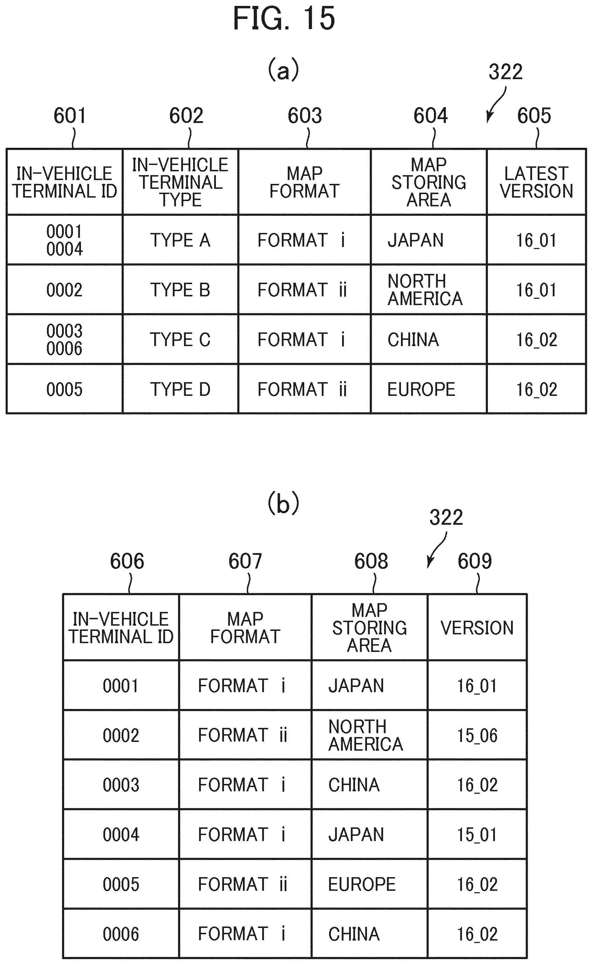

Figs. 15 include drawings illustrating exemplary map type information stored in the in-vehicle terminal-to-map correspondence DB 322. The in-vehicle terminal-to-map correspondence DB 322 stores, for example, the information as illustrated in tables of Figs. 15 as the map type information.

The table of Fig. 15(a) is the exemplary map type information managed for each model. In this table, a column 601 has cells that store the IDs of the respective in-vehicle terminals by models. A column 602 has cells that store type information indicating the models of the respective in-vehicle terminals. The column 602 stores model numbers or the like with which the models of the respective in-vehicle terminals are uniquely identifiable. A column 603 has cells that store information indicating formats of the map information corresponding to the respective models. The column 603 stores information on the formats for indicating the map information, for example, Navigation Data Standard (NDS) and Kiwi. A column 604 has cells that store information on areas indicated by the map information corresponding to the respective models. The column 604 stores information indicating countries or regions, for example, Japan, North America, China, and Europe, of the included map information. A column 605 has cells that store information indicating the latest versions of the map information corresponding to the respective models. The map information of the in-vehicle terminal is updated with a predetermined frequency, for example, several times a year, in accordance with the change in local road shape and the like. Consequently, the contents of the included map are different among different versions of the map information even if the map format is identical. Therefore, the map information of the in-vehicle terminal is managed for each version.

When the map type information as Fig. 15(a) is used, the travel history adaptation unit 310 converts the independent travel history information 124 so as to make the travel history information adapted to the map information of the latest version. Accordingly, in this case, the map information 122 is configured to be always updated to the latest version in the in-vehicle terminal 100a.

The table of Fig. 15(b) is the exemplary map type information managed for each terminal. In this table, a column 606 has cells that store IDs of the respective in-vehicle terminals for each terminal. A column 607 has cells that store information indicating formats of the map information of the respective in-vehicle terminals. A column 608 has cells that store information on regions indicated by the map information of the respective in-vehicle terminals. A column 609 has cells that store information indicating versions of the map information of the respective in-vehicle terminals.

The use of the map type information as Fig. 15(b) allows the travel history adaptation unit 310 to convert the independent travel history information 124 so as to make the travel history information adapted to the map information of any version not limited to the latest version. Accordingly, in this case, the map information 122 can be updated to any version in the in-vehicle terminal 100a.

According to the above-described second embodiment of the present invention, the information system includes the in-vehicle terminal 100a mounted to the own vehicle and the server 300 connected to the in-vehicle terminal 100a. The in-vehicle terminal 100a includes the in-vehicle storage 113, the travel history storing unit 111, the travel history independence unit 120, and the travel history upload unit 125. The in-vehicle storage 113 stores the travel history information 123 that indicates the travel history of the own vehicle based on the map information 122 before the change of contents. The travel history storing unit 111 causes the in-vehicle storage 113 to store the travel history information 123. The travel history independence unit 120 converts the travel history information 123 stored in the in-vehicle storage 113 into the independent travel history information 124 independent of the map information 122 before the change of contents. The travel history upload unit 125 transmits the independent travel history information 124 converted from the travel history information 123 by the travel history independence unit 120 to the server 300. The server 300 includes the server storage 313, the travel history adaptation unit 310, and the travel history delivery unit 311. The server storage 313 stores the independent travel history information 124 transmitted from the in-vehicle terminal 100a. The travel history adaptation unit 310 converts the independent travel history information 124 stored in the server storage 313 into the travel history information adapted to the map information 122 after the change of contents. The travel history delivery unit 311 delivers the converted travel history information converted from the independent travel history information 124 by the travel history adaptation unit 310 to the in-vehicle terminal 100a. This configuration ensures, similarly to first embodiment, the accumulated travel history information to be transferred and used when the in-vehicle terminal mounted to the vehicle is replaced with another in-vehicle terminal, and when the map data in the in-vehicle terminal is updated.

In the above-described first and second embodiments, the example where the travel history information 123 includes the intersection history information 130 and the road history information 131, and the independent travel history information 124 includes the independent intersection history information 132 and the independent road history information 133 has been described. However, a configuration may be employed such that the travel history information 123 does not include the road history information 131, and the independent travel history information 124 does not include the independent road history information 133. That is, only the history of the entry link and the exit link of the own vehicle at each intersection may be recorded as the travel history information 123, this travel history information 123 may be converted into the independent travel history information 124, and thus obtained independent travel history information 124 may be adapted to the map information 122 after the change of contents. In this case, the travel history independence unit 120 can omit the process of Step S40 in the travel history independence process illustrated in Fig. 4. Furthermore, in this case, the process of Step S30 may be omitted so as not to generate the relative position information. The travel history adaptation units 121 and 310 may omit the process of Step S130 in the travel history adaptation process illustrated in Fig. 6. Even this configuration can provide the operational advantages similar to those described in the first and second embodiments.

The above-described embodiments are merely one example, and the present invention is not limited to these contents as long as the features of the invention are intact. While the various embodiments have been described above, the present invention is not limited to these contents. Other aspects considered within the scope of the technical idea of the present invention are also included in the scope of the present invention.

This application is based upon, and claims the benefit of priority from, corresponding Japanese Patent Application No. 2017-012250 filed in the Japan Patent Office on January 26, 2017, the entire contents of which are incorporated herein by reference.

### List of Reference Signs

- 100, 100a: in-vehicle terminal
- 101: display device
- 102: operating device
- 103: positioning sensor
- 104: communication unit
- 105: ROM
- 106: RAM
- 107: auxiliary storage device
- 108: CPU
- 110: route estimation unit
- 111: travel history storing unit
- 112: travel history conversion unit
- 113: in-vehicle storage
- 120: travel history independence unit
- 121: travel history adaptation unit
- 122: map information
- 123: travel history information
- 124: independent travel history information
- 125: travel history upload unit
- 130: intersection history information
- 131: road history information
- 132: independent intersection history information
- 133: independent road history information
- 300: server
- 301: output unit
- 302: input unit
- 303: auxiliary storage device
- 304: communication unit
- 305: CPU
- 306: RAM
- 310: travel history adaptation unit
- 311: travel history delivery unit
- 312: map type retrieval unit
- 313: server storage
- 320: map DB
- 321: independent travel history DB
- 322: in-vehicle terminal-to-map correspondence DB

## Claims

1. A travel history conversion method for converting first travel history information that indicates a travel history of a vehicle based on first map information into second travel history information adapted to second map information different from the first map information with a computer,
wherein the first travel history information includes first intersection history information that indicates the travel history of the vehicle in the first map information for each intersection, and
wherein the first travel history information is converted into the second travel history information by executing a travel history conversion process with the computer, the travel history conversion process converting the first intersection history information into second intersection history information adapted to the second map information.

2. The travel history conversion method according to claim 1,
wherein the travel history conversion process includes:
a travel history independence process that converts the first intersection history information into independent intersection history information that indicates the travel history of the vehicle for each intersection independent of the first map information; and
a travel history adaptation process that converts the independent intersection history information into the second intersection history information.

3. The travel history conversion method according to claim 2,
wherein the computer generates relative position information that indicates a relative position between connection links of the intersection in the first map information in the travel history independence process, and
wherein the computer converts the independent intersection history information into the second intersection history information based on the relative position information in the travel history adaptation process.

4. The travel history conversion method according to claim 2,
wherein the computer includes a first computer and a second computer,
wherein the first computer executes the travel history independence process,
wherein the independent intersection history information obtained in the travel history independence process is transmitted from the first computer to the second computer, and
wherein the second computer executes the travel history adaptation process based on the independent intersection history information received from the first computer.

5. The travel history conversion method according to claim 1,
wherein the first intersection history information includes a history of a combination of an entry link and an exit link as a history table for each intersection, the entry link corresponding to a road on which the vehicle travels at entering into the intersection, and the exit link corresponding to a road on which the vehicle travels at exiting from the intersection, and
wherein the computer expands or reduces the history table for the intersection where a count of connected roads in the first map information is different from a count of connected roads in the second map information in the travel history conversion process.

6. An information processing device comprising:
a travel history conversion unit that converts first travel history information into second travel history information, the first travel history information indicating a travel history of a vehicle based on first map information, the second travel history information being adapted to second map information different from the first map information,
wherein the first travel history information includes first intersection history information that indicates the travel history of the vehicle in the first map information for each intersection, and
wherein the travel history conversion unit converts the first travel history information into the second travel history information by converting the first intersection history information into second intersection history information adapted to the second map information.

7. The information processing device according to claim 6,
wherein the travel history conversion unit includes:
a travel history independence unit that converts the first intersection history information into independent intersection history information that indicates the travel history of the vehicle for each intersection independent of the first map information; and
a travel history adaptation unit that converts the independent intersection history information into the second intersection history information.

8. The information processing device according to claim 7,
wherein the travel history independence unit generates relative position information that indicates a relative position between connection links of the intersection in the first map information, and
wherein the travel history adaptation unit converts the independent intersection history information into the second intersection history information based on the relative position information.

9. The information processing device according to claim 6,
wherein the first intersection history information includes a history of a combination of an entry link and an exit link as a history table for each intersection, the entry link corresponding to a road on which the vehicle travels at entering into the intersection, and the exit link corresponding to a road on which the vehicle travels at exiting from the intersection, and
wherein the travel history conversion unit expands or reduces the history table for the intersection where a count of connected roads in the first map information is different from a count of connected roads in the second map information.

10. The information processing device according to claim 7, further comprising:
a storage unit that stores the first map information or the second map information,
wherein the travel history independence unit is operated when the first map information is stored in the storage unit, and
wherein the travel history adaptation unit is operated when the first map information is updated to the second map information in the storage unit or when the independent intersection history information is input from outside.

11. The information processing device according to claim 10, comprising:
a display device that displays a permission request screen for requesting a permission from a user, and
an operating device that accepts an operation by the user,
wherein the display device displays the permission request screen before operating at least one of the travel history independence unit and the travel history adaptation unit, and
wherein when the user inputs a predetermined operation with the operating device corresponding to the display of the permission request screen, at least one of the travel history independence unit and the travel history adaptation unit is operated.

12. An information system comprising:
an in-vehicle terminal mounted to a vehicle; and
a server connected to the in-vehicle terminal,
wherein the in-vehicle terminal includes:
an in-vehicle storage that stores first travel history information that indicates a travel history of the vehicle based on first map information;
a travel history storing unit that causes the in-vehicle storage to store the first travel history information;
a travel history independence unit that converts the first travel history information stored in the in-vehicle storage into independent travel history information independent of the first map information; and
a travel history upload unit that transmits the independent travel history information converted from the first travel history information by the travel history independence unit to the server, and
wherein the server includes:
a server storage that stores the independent travel history information transmitted from the in-vehicle terminal;
a travel history adaptation unit that converts the independent travel history information stored in the server storage into second travel history information adapted to second map information different from the first map information; and
a travel history delivery unit that delivers the second travel history information converted from the independent travel history information by the travel history adaptation unit to the in-vehicle terminal.

13. The information system according to claim 12,
wherein the first travel history information includes first intersection history information that indicates the travel history of the vehicle in the first map information for each intersection,
wherein the travel history independence unit converts the first travel history information into the independent travel history information by converting the first intersection history information into independent intersection history information that indicates the travel history of the vehicle for each intersection independent of the first map information, and
wherein the travel history adaptation unit converts the independent travel history information into the second travel history information by converting the independent intersection history information into second intersection history information adapted to the second map information.

14. The information system according to claim 13,
wherein the travel history independence unit generates relative position information that indicates a relative position between connection links of the intersection in the first map information, and
wherein the travel history adaptation unit converts the independent intersection history information into the second intersection history information based on the relative position information.

15. The information system according to claim 13,
wherein the first intersection history information includes a history of a combination of an entry link and an exit link as a history table for each intersection, the entry link corresponding to a road on which the vehicle travels at entering into the intersection, and the exit link corresponding to a road on which the vehicle travels at exiting from the intersection,
wherein the travel history independence unit generates the independent intersection history information that includes the history table, and
wherein the travel history adaptation unit expands or reduces the history table for the intersection where a count of connected roads in the first map information is different from a count of connected roads in the second map information.

16. The information system according to claim 12,
wherein the in-vehicle storage is configured to store the first map information or the second map information,
wherein the in-vehicle terminal operates the travel history independence unit when the first map information is stored in the in-vehicle storage, and
wherein the server operates the travel history adaptation unit when the first map information is updated to the second map information in the in-vehicle storage or when the in-vehicle storage that stores the first map information is replaced with the in-vehicle storage that stores the second map information.

17. The information system according to claim 16,
wherein the in-vehicle terminal includes:
a display device that displays a permission request screen for requesting a permission from a user; and
an operating device that accepts an operation by the user,
wherein the display device displays the permission request screen before the travel history independence unit is operated, and
wherein the travel history independence unit is operated when the user inputs a predetermined operation with the operating device corresponding to the display of the permission request screen.
